# EUROPÄISCHE PATENTSCHRIFT

(11) **EP 1 292 487 B1**
(45) Veröffentlichungstag und Bekanntmachung des Hinweises auf die Patenterteilung: **11.08.2004**
(21) Anmeldenummer: 01947189.5
(22) Anmeldetag: 07.06.2001
(51) Int. Cl.: B62H 5/10

(54) **DIEBSTAHLSICHERUNG FÜR FAHRRÄDER**
ANTI-THEFT DEVICE FOR CYCLES
ANTIVOL POUR CYCLES

(30) Priorität: 17.06.2000 DE 10029942
(43) Veröffentlichungstag der Anmeldung: 19.03.2003
(73) Patentinhaber: Weih-Safe-tec GbR, 98527 Suhl (DE)
(72) Erfinder: HENGELHAUPT, Bernd, 98544 Zella-Mehlis (DE); HENGELHAUPT, Rüdiger, Sosuael Batey (DM)
(86) Internationale Anmeldenummer: PCT/DE2001/002132
(87) Internationale Veröffentlichungsnummer: WO 2001/098135

(56) Entgegenhaltungen:
- DE-A- 4 306 562
- DE-A- 19 753 024
- DE-C- 445 139

## Beschreibung

Die Erfindung betrifft eine Diebstahlsicherung für Fahrräder mit einem oder mehreren Rahmenrohr/en und einer an diesem/diesen angeordneten Tretlagerführung.

DE-A-43 06 592 zeigt eine Diebstahsicherung gemäß Oberbegriff von Anspruch 1.

Zur Verhinderung der unbefugten Benutzung von Fahrrädern wurden Diebstahlsicherungen der unterschiedlichsten Art entwickelt.

So sind aus dem Stand der Technik Seil-, Ketten- oder Bügeischlösser bekannt, mit denen Fahrräder gegen Diebstahl gesichert werden können. Dabei wird das Fahrrad beispielsweise mittels des jeweiligen Schlosses mit einem stationären Gegenstand (wie z. B. einem Fahrradständer oder einem Laternenmast, usw.) verbunden, um so eine unbefugte Benutzung zu verhindern.

Neben diesen separaten Bauformen sind auch am Fahrrad angeordnete Schließsysteme mit Sicherungsseilen, wie beispielsweise im GB 1 474 834 vorgestellt, bekannt geworden.

Da die Anschaffungskosten der Fahrräder oftmals relativ hoch sind, werden selbstverständlich auch hochwertige Seil-, Ketten- oder Bügelschlösser mit hochwertigen Schließsystemen angeboten.

Einer der wesentlichen Nachteile dieser hochwertigen Sicherheitsfahrradschlösser ist das hohe Transportgewicht des Schließsystems, insbesondere das der Sicherheitsummantelung des Schlosses.

Generell muß daher festgestellt werden, daß dem gegenwärtigen Trend entsprechend, die hochwertigen Fahrräder immer leichter gebaut werden, aber paradoxerweise gleichzeitig die diesen hochwertigen Fahrrädern zuzuordnenden Sicherheitsfahrradschlösser immer schwerer werden.

Auch die im Stand der Technik vorbeschriebenen, separat am Fahrradrahmen befestigten Sicherheitsfahrradschlösser können selbst in Verbindung mit der stabilsten Bauform eines Seiles, einer Kette oder eines Bügels auf Grund der geringen Einbautiefe des Sicherheitsschlosses, infolge gezielter Manipulationen am Sicherheitsschloss oder durch Zerstörung des Sicherheitsschlosses gewaltsam geöffnet werden, so daß selbst bei diesen zwangsläufig mit einem sehr hohem Transportgewicht verbundenen Sicherheitsschlossbauformen der Dieb nach dem Aufbrechen des Schlosses mit einem voll funktionsfähigen Fahrrad davon fahren kann.

Um nun ein solches "Davonfahren" zu verhindern wurden auch andere, unterschiedliche Varianten von Fahrradsicherungen entwickelt.

Im DE 195 31 315 A1 wird beispielsweise ein Fahrrad-Pedal-Verschlußsystem vorgestellt, mittels welchem die Drehbewegung der Fahrradpedale verhindert wird.

Nachteilig bei dieser Bauform ist, daß der Dieb, nachdem er das Fahrrad beispielsweise an einem "sicheren Ort" geschoben hat, durch einfaches Herausdrehen der Fahrradpedale dieselben gegen ein anderes, ein neues Paar Fahrradpedale auswechseln kann und so schnell wieder über ein voll funktionsfähiges Fahrrad verfügt.

In anderen Bauformen wird vorgeschlagen das Tretlager durch ein Verschlusssystem zu blockieren. Derartige Tretlagerblockiersysteme werden beispielsweise im NL 8100343, im DE 43 06 562 C2 und im EP 0 630 802 vorbeschrieben.

Die dort beschriebenen Verschlusssysteme sind jedoch nur in speziellen Rahmenbauformen einsetzbar und können zumeist nicht nachgerüstet werden.

Das im DE 197 53 024 C2 vorgestellte Tretlagerblockiersystem, mit einem aus zwei ineinander schiebbaren, aus zwei mit jeweils einem der beiden Flansche verbundenen Buchsen gebildeten Hülsenkörper, bei dem der Sperrschieber gleichzeitig in beide Buchsen eingreifen muß, um somit ein Herausdrehen der Flansche im abgschlossenen Zustand nach Demontage der Pedale zu vermeiden, ist zwar universeller einsetzbar, erfordert jedoch einen hohen Fertigungs- und Montageaufwand und hat zudem mit den bereits im Stand der vorbeschriebenen Tretlagerblockiersystemen den Nachteil gemeinsam, daß trotz eines mit diesem System verschlossenen Tretlagers ein Wegschieben oder Wegtragen des gesamten Fahrrades möglich ist, wodurch ein Diebstahl des kompletten Fahrrades wie auch das nachfolgende Zerlegen des gestohlenen Fahrrades in "gebrauchsfähige Einzelteile" nicht verhindert werden kann.

Zerstört der Dieb nach dem Wegschieben des Fahrrades bei anschließenden Manipulationen am blockierten Tretlager beispielsweise den Leichtbaurahmen des Fahrrades, so ersetzt selbst nach dem Wiederauffinden des kompletten Fahrrades keine Versicherung den durch die Manipulation am Tretlagerblockiersystem zerstörten Rahmen.

Der Erfindung liegt daher die Aufgabe zugrunde, die vorgenannten Nachteile des Standes der Technik zu beseitigen und eine fertigungstechnisch einfach herstellbare Diebstahlsicherung für Fahrräder zu entwickeln, die ein Wegschieben oder Wegtragen des Fahrrades durch Unbefugte verhindert, sich durch ein sehr hochwertiges, schwer zugängliches Schließsystem mit niedrigem Transportgewicht auszeichnet, welches bei allen Fahrradrahmenbauformen und allen Fahrradrahmenmaterialien (selbst bei Leichtbaumaterialien) kostengünstig mit geringem Montageaufwand nachrüstbar ist, und eine Zerstörung des Fahrradrahmens durch bei Gewalteinwirkung extrem beanspruchte Baugruppen des Schließsystems vermeidet.

Diese Aufgabe wird mittels einer Diebstahlsicherung für Fahrräder mit einem oder mehreren Rahmenrohren (1) und einer an diesem/diesen angeordneten Tretlagerführung (2) gelöst, wobei beidseitig in der Tretlagerführung (2) jeweils eine rechte und eine linke Lageraufnahme (3) mit Wälzlagern (4) angeordnet ist, in denen eine Tretlagerwelle (5) drehbar gelagert ist, wobei an einem Ende der Tretlagerwelle (5) ein Kettenrad (6) mit einer Pedalkurbel (7) und am gegenüberliegenden Ende der Tretlagerwelle (5) eine Pedalkurbel (7) angeordnet ist, welche mittels jeweils einer Befestigungsschraube (8) beidseitig der Tretlagerwelle (5) verschraubt sind.

Erfindungswesentlich ist dabei auch, daß sowohl axial in der Tretlagerwelle (5) wie auch axial in den Befestigungsschrauben (8) zentrisch Durchgangsbohrungen (9) angeordnet sind, und die im Mittenbereich (10) in ihrem Außendurchmesser stärker dimensionierte Tretlagerwelle (5) dort mit einer radialen Aussparung (11) versehen ist, in welcher sowohl ein Schlossgehäuse (12) mit einem Zylinderschloss (13) wie auch ein Schieber (17) angeordnet sind, wobei der Schlüssel (14) des Zylinderschlosses (13) axial die dem Zylinderschloss am nächsten liegende Befestigungsschraube (8) durchdringt, diese jedoch mit einem Betätigungsstück (15) überragt.

Auf Grund dieser niedrigen Anordnung des Schließsystems in der Tretlagerwelle und der gleichzeitig großen Einbautiefe inmitten der Tretlagerwelle ist das Schließsystem insbesondere für unerwünschte Manipulationen schwer zugänglich.

Darüber hinaus zeichnet sich die erfindungsgemäße, "geschützte" Unterbringung des Zylinderschlosses inmitten der funktional bedingten Tretlagerwelle durch ein extrem niedriges zusätzliches Transportgewicht aus.

Kennzeichnend ist weiterhin, daß an der gegenüberliegenden Stirnseite des Zylinderschlosses (13) ein Exzenterbolzen (16) angeordnet ist, der über eine Exzenterbolzenführung (18) in einer Stirnseite des in der Aussparung (11) verschiebbar angeordneten Schiebers (17) in Wirkverbindung steht. Beim Drehen des Schlüssels (14) des Zylinderschlosses (13) bewegt sich der Exzenterbolzen (16) auf einem Teil einer Kreisbahn und bewirkt infolge seines Zusammenwirkens mit der am Schieber (17) angeordnete Exzenterbolzenführung (18) ein translatorisches Verschieben des Schiebers (17) in seinen, im Mittenbereich (10) der Tretlagerwelle (5) angeordneten, Linearführungen.

Wesentlich ist dabei, daß in der der Exzenterbolzenführung (18) gegenüberliegenden Stirnseite des Schiebers (17) eine mit einer Zentrierbohrung (21) versehene Schließnut (19) angeordnet ist, in welche der Schließkopf (23) eines, durch die Durchgangsbohrung (9) der gegenüberliegenden, zweiten Befestigungsschraube (8) und die Aussparung (11) in der Tretlagerwelle (5) hindurchsteckbaren, Schließbolzens (22) eines Befestigungssystems hineinragt.

Erfindungsgemäß befindet sich im "aufgeschlossen" Zustand die Zentrierbohrung (21) des Schieber (17) in mittiger Position, so daß der Schließkopf (23) des Schließbolzens (22) vollständig in die Schließnut (19) eingeführt werden kann. Wird nun der Schlüssel (14) des Zylinderschlosses (13) an seinem die Befestigungsschraube (8) überragenden Betätigungsstück (15) gedreht, so bewegt sich der Exzenterbolzen (16) auf seiner Kreisbahn und bewirkt infolge seines Zusammenwirkens mit der am Schieber (17) angeordnete Exzenterbolzenführung (18) ein translatorisches Verschieben des Schiebers (17) in seiner, im Mittenbereich (10) der Tretlagerwelle (5) angeordneten, Linearführung. Dabei gleitet der nicht von der Zentrierbohrung erfasste "Arretierbereich" die Schließnut (19), unmittelbar hinter dem Schließkopf (23), in den Freistich (20) des Schließbolzens (22), so daß dadurch der Schließbolzen (22) in axialer Richtung exakt "in der Tretlagerwelle (5)" positioniert ist.

Erfindungswesentlich ist auch, daß der Schieber (17) in seiner Höhe auch etwas größer, dh. so dimensioniert sein kann, daß er in Schließstellung in eine Ausnehmung (31) einer um eine Schließbuchse (32) verlängerten Lageraufnahme (3) "einfährt". Mittels dieser erfindungsgemäßen Anordnung wird mit einer exakten axialen Positionierung des Schließbolzens in der Tretlagerwelle gleichzeitig bewirkt, daß das Tretlager beim Verriegeln des Schließbolzens in seiner Drehfreiheit blockiert wird.

Ein Herausdrehen der von nur einer Schließbuchse (32) blockierten Tretlagerwelle ist auf Grund der erfindungsgemäßen Anordnung beispielsweise einer Kette, eines Schließbügels, usw. nicht möglich. Darüber hinaus können infolge der erfindungsgemäßen Lösung selbst die Pedalkurbeln "im abgeschlossenen Zustand" nicht demontiert werden.

Kennzeichnend ist auch, daß die Ausnehmungen (31) in der Schließbuchse (32) vorzugsweise so angeordnet sind, daß das Eingreifen des Schiebers (17) in die Ausnehmungen (31) stets bei vertikaler Pedalstellung erfolgt.

In einer solchen vertikalen Pedalstellung ist es zudem nicht möglich ein für die Tretlagerwelle hohes Drehmoment zu erzeugen.

Ein weiteres Merkmal der Erfindung besteht darin, daß an dem die Befestigungsschraube (8) überragenden Ende des Schließbolzens (22) des Befestigungssystems der Bolzenkopf (24) mit einer tretlagerseitig benachbarten Ringführung (25) angeordnet ist, auf welcher ein Schließring (26) aufgesteckt wird, wobei sowohl am Schließkopf (23) wie auch am Schließring (26) ein flexibles Sicherungselement ( 27), wie beispielsweise ein hochfestes Band, ein Stahlseil oder eine Kette befestigt ist.

Wird nun vor dem Verriegeln des Schließkopfes (23) das mit seinem einen Enden am Bolzenkopf (24) und mit seinem anderen Ende am Schließring (26) angeordnete flexible Sicherungselement (27) beispielsweise um einen Mast geschlungen und zudem durch die beiden Räder des Fahrrades hindurchgeführt, so kann nach dem Aufstecken des Schließrings (26) auf die Ringführung (25) des Schließbolzens (22) der Schließkopf (23) des Schließbolzens (22) in der erfindungsgemäßen Tretlagerwelle (5) arretiert werden.

Erfindungswesentlich ist auch, daß am Schließbolzen (22) ein separates Anschlußstück (28) mit einem an diesem angeordnetem Sicherungselement (27) so angeordnet ist, daß der Schließbolzen (22) mit dem Anschlußstück (28) durch Überstülpen des Schließringes (26) formschlüssig verbunden wird.

Diese erfindungsgemäße Ausführungsform dient bei Anwendung der erfindungsgemäßen Diebstahlssicherung in der Bauvariante ohne die Blockierung des Tretlagers im abgeschlossenen Zustand, insbesondere der Minimierung des Transportvolumens der im abgeschlossenen Zustand zu transportierenden Baugruppen und ermöglicht gleichzeitig ein Verbleiben und "Abschließen" des nicht mit einem Sicherungselement (27) versehenen Schließbolzens (22) in der Tretlagerwelle (5) während der Fahrradfahrt, so daß der aufgrund seiner Länge etwas sperrige Schließbolzen (22) (bei der Bauvariante gemäß Anspruch 1) dann nicht separat transportiert werden muss. Gleichzeitig verhindert diese Bauform der erfindungsgemäßen Lösung, durch das Verbleiben des Schließbolzens (22) in der Durchgangsbohrung (9), eine Verschmutzung der in der Tretlagerwelle angeordneten Funktionsbaugruppen. Aufgrund der erfindungsgemäßen Ausbildung des Schließringes (26) wie auch des Bolzenkopfes (24) aus gehärtetem, beziehungsweise hochfestem Material in Verbindung mit deren erfindungsgemäßen Anordnung unmittelbar vor der Befestigungsschraube (8) der Pedalkurbel (7) wird, wie bereits erwähnt, eine unbefugte Demontage der Tretlagerwelle (5) verhindert, so daß mit der erfindungsgemäßen Lösung dem Anwender ein sehr hochwertiges, schwer zugängliches Schließsystem mit niedrigem Transportgewicht zur Verfügung gestellt wird, welches bei allen Fahrradrahmenbauformen und allen Fahrradrahmenmaterialien (selbst bei Leichtbaumaterialien) kostengünstig nachrüstbar ist und gleichzeitig die Zerstörung des Fahrradrahmens durch bei Gewalteinwirkung extrem beanspruchte Baugruppen des Schließsystems vermeidet.

Eine andere Ausführungsform der Erfindung zeichnet sich dadurch aus, daß am Schließbolzen (22) ein Schließbügel (33) angeordnet ist. Dieser Schließbügel kann nun beispielsweise die Tretlagerwelle, einen Pfosten oder auch einen Laternenpfahl und verschiedene Baugruppen des Rahmens formschlüssig miteinander verbinden, so daß auch so ein Diebstahl des Fahrrades vermieden werden kann.

Erfindungswesentlich ist auch, daß der Schließring (26), der Bolzenkopf (24) wie auch der Schließbügel (33) aus gehärtetem, beziehungsweise hochfestem Material besteht/bestehen. Infolge dieses speziellen Materialeinsatzes wird materialseitig einer beabsichtigten Zerstörung der erfindungsgemäßen Diebstahlsicherung entgegenwirkt.

Kennzeichnend ist weiterhin, daß ein- oder beidseitig an den Durchgangsbohrungen (9) der Befestigungsschrauben (8) Abdeckelemente angeordnet sein können, die eine Verschmutzung der in der Tretlagerwelle angeordneten Funktionsbaugruppen bei abgezogenem Schließbolzen (22) und/oder abgezogenem Schlüssel (14) vermeiden.

Wesentlichen ist auch, daß bei speziellen Bauformen der Schlüssel (14) nur bei abgeschlossenen Schließsystem herausgezogen werden kann, so daß einerseits einer Verschmutzung der in der Tretlagerwelle angeordneten Funktionsbaugruppen entgegengewirkt werden kann, wobei bei diesen speziellen Bauformen der abgezogene Schlüssel beispielsweise gegenüber den Versicherungen als Nachweis der in Funktion gesetzten Diebstahlsicherung vorgelegt werden kann.

Weitere Merkmale, Einzelheiten und Vorteile der Erfindung ergeben sich darüber hinaus neben dem Wortlaut der Ansprüche, auch in Verbindung mit den zugehörigen Zeichnungen, aus den nachfolgenden Erläuterungen zu den Ausführungsbeispielen.

Dabei zeigen:
- Figur 1 :: die erfindungsgemäße Diebstahlsicherung ohne Blockierung der Tretlagerwelle in einer Schnittdarstellung;
- Figur 2 :: die erfindungsgemäße Diebstahlsicherung mit erfindungsgemäßer Blockierung der Tretlagerwelle in der Draufsicht in einer Schnittdarstellung;
- Figur 3 :: das Verriegelungselement, den Schieber 17, in der Vorderansicht;
- Figur 4 :: das Verriegelungselement, den Schieber 17, in der Rückansicht;
- Figur 5 :: den Schließbolzen 22 in einer speziellen Ausführungsform;
- Figur 6 :: den Schließbolzen 22 in einer weiteren speziellen Ausführungsform;
- Figur 7 :: das mittels eines Sicherungsbandes mit der erfindungsgemäßen Lösung an einem Laternenmast "angeschlossene" Fahrrad;

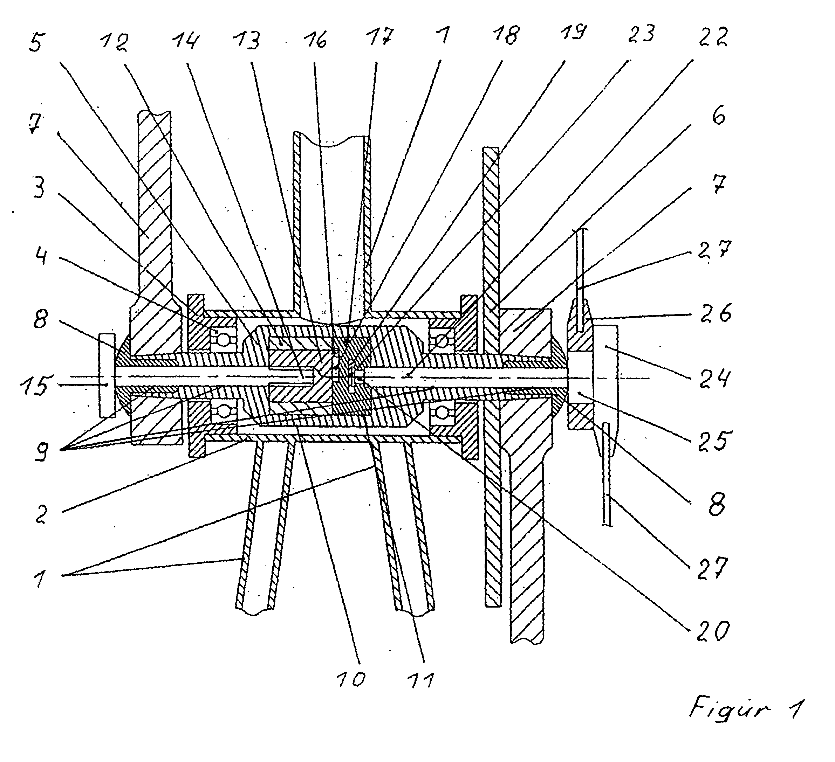

Die in der Figur 1 im Schnitt dargestellte erfindungsgemäße Diebstahlsicherung für Fahrräder zeigt eine Tretlagerführung 2 mit drei an dieser angeordneten Rahmenrohren 1.

In der Tretlagerführung 2 sind beidseitig jeweils eine rechte und eine linke Lageraufnahme 3 mit jeweils einem Wälzlager 4 angeordnet. In diesen Wälzlagern 4 ist eine Tretlagerwelle 5 drehbar gelagert. An einem Ende der Tretlagerwelle 5 ist ein Kettenrad 6 mit einer Pedalkurbel 7 angeordnet. Am gegenüberliegenden Ende der Tretlagerwelle 5 ist die zweite Pedalkurbel 7 angeordnet. Beide sind jeweils mittels einer Befestigungsschraube 8 mit dem jeweiligen Ende der Tretlagerwelle 5 verschraubt.

Sowohl in der Tretlagerwelle 5 wie auch in den Befestigungsschrauben 8 ist jeweils mittig eine Durchgangsbohrung 9 angeordnet. Der den Lagerstellen benachbarte Mittenbereich 10 der Tretlagerwelle 5 ist im Außendurchmesser stärker dimensioniert, und mit einer Aussparung 11 versehen.

In dieser Aussparung 11 befindet sich ein Schlossgehäuse 12 mit einem Zylinderschloss 13. Der Schlüssel 14 des Zylinderschlosses 13 durchragt axial die dem Zylinderschloss am nächsten liegende Befestigungsschraube 8. Das Betätigungsstück 15 des Schlüssels 14 überragt die Befestigungsschraube 8.

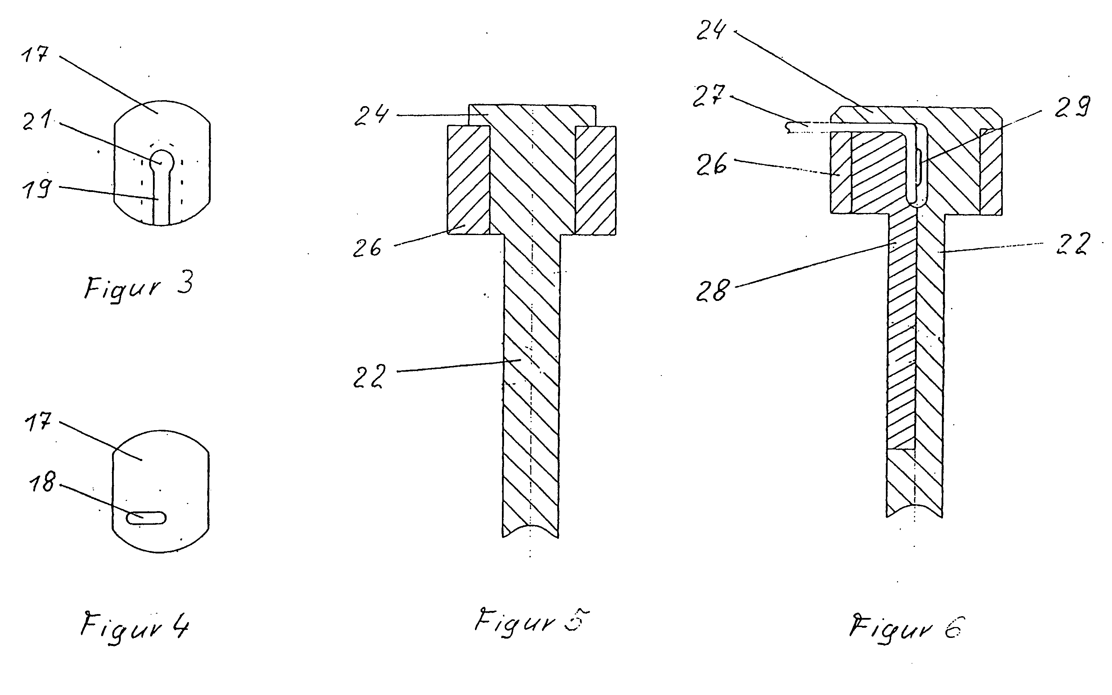

An der gegenüberliegenden Stirnseite des Zylinderschlosses 13 ist ein Exzenterbolzen 16 angeordnet. Dieser steht mit dem verschiebbar in der Aussparung 11 angeordneten Schieber 17 über eine in einer Stirnseite eines Schiebers 17 angeordnete Exzenterbolzenführung 18 in Wirkverbindung (siehe auch Figur 3. Beim Drehen des Schlüssels 14 des Zylinderschlosses 13 bewegt sich der Exzenterbolzen (16) auf einem Teilkreis und bewirkt infolge seines Zusammenwirkens mit der linearverschiebbaren Anordnung des Schiebers 17 in der Aussparung 11 im Mittenbereich 10 der Tretlagerwelle 5 und der am Schieber 17 angeordnete Exzenterbolzenführung 18 ein translatorisches Verschieben des Schiebers 17.

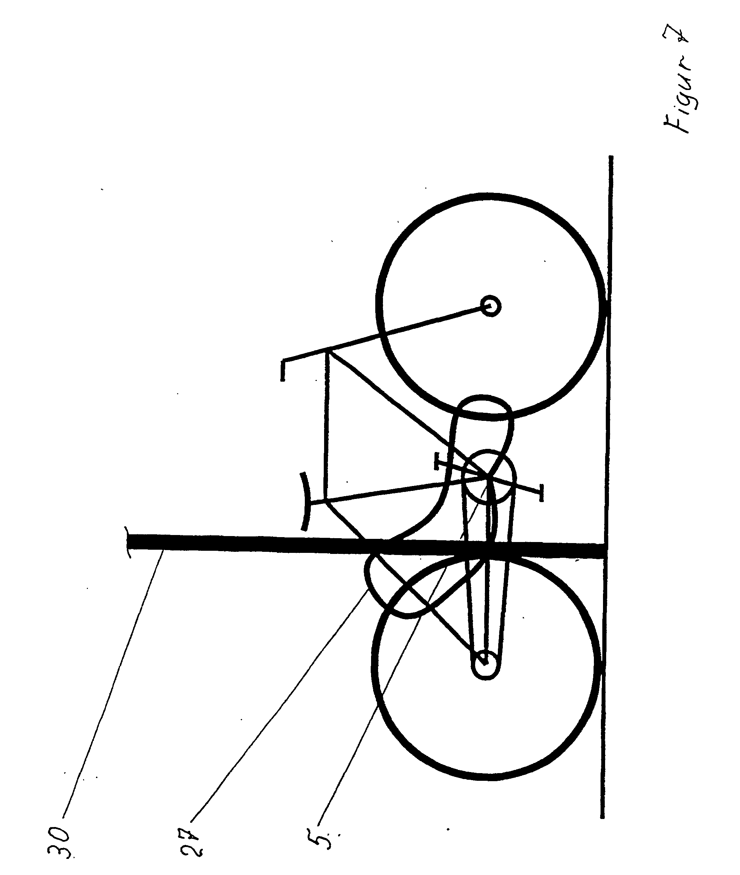

In der gegenüberliegenden Stirnseite des Schiebers 17 ist, wie in der Figur 4 dargestellt, eine Schließnut 19 mit einer Zentrierbohrung 21 angeordnet.

Im nicht verschlossenen Zustand ist die Zentrierbohrung 21 des Schieber 17 in mittiger Position, so daß der Schließkopf 23 des Schließbolzens 22 vollständig in die Schließnut 19 eingeführt werden kann. Wird nun der Schlüssel 14 des Zylinderschlosses 13 an seinem die Befestigungsschraube 8 überragenden Betätigungsstück 15 gedreht, so bewegt sich der Exzenterbolzen 16 auf seiner Kreisbahn und bewirkt infolge seines Zusammenwirkens mit der am Schieber 17 angeordnete Exzenterbolzenführung 18 ein translatorisches Verschieben des Schiebers 17 in seinen im Mittenbereich 10 der Tretlagerwelle 5 angeordneten Linearführung. Dabei gleitet der nicht von der Zentrierbohrung erfasste, Arretierbereich der Schließnut 19 über den Freistich 20 des Schließbolzens 22 welcher sich unmittelbar hinter dem Schließkopf 23 befindet, wodurch der Schließbolzen 22 in axialer Richtung exakt in der Tretlagerwelle 5 positioniert wird.

Die Schnittdarstellung gemäß Figur 1 zeigt den in diese Schließnut 19 hineinragenden Schließkopf 23 eines Schließbolzens 22 welcher die "zweite" Befestigungsschraube 8 mit seiner Ringführung 25 und dem Bolzenkopf 24 überragt. Auf die Ringführung 25 ist ein Schließring 26 aufgesteckt.

Sowohl am Schließkopf 23 wie auch am Schließring 26 ist ein flexibles Sicherungselement 27 (beispielsweise ein hochfestes Band, ein Stahlseil oder eine Kette) angeordnet.

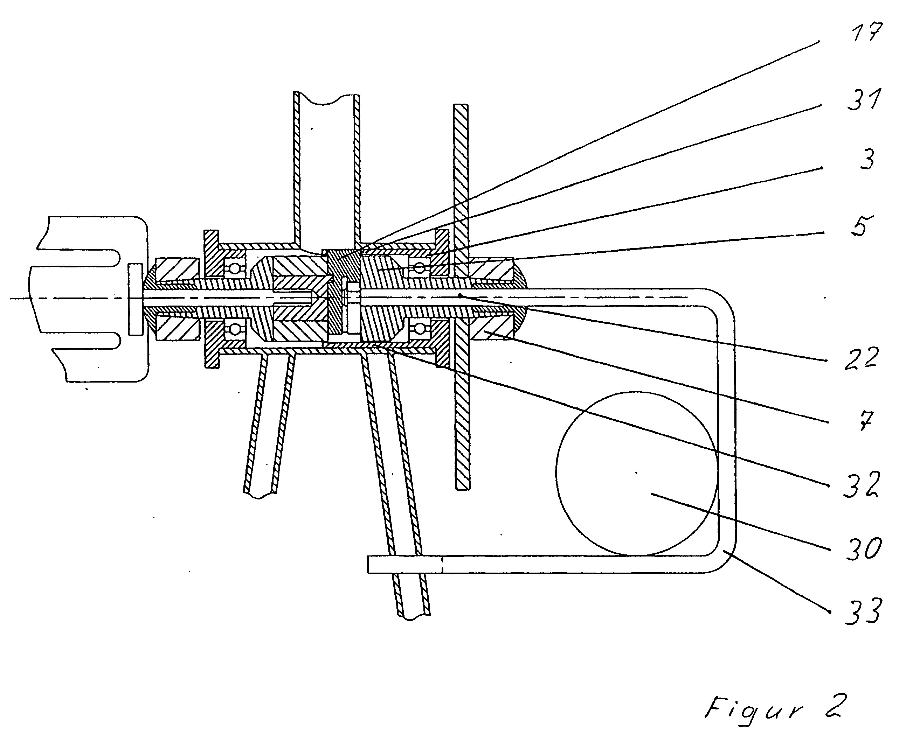

Am Schließbolzen 22 ist in dieser Ausführungsform ein Schließbügel 33 angeordnet. Dieser Schließbügel verbindet, wie in Figur 2 dargestellt, beispielsweise die Tretlagerwelle 5, einen Laternenmast 30 und verschiedene Baugruppen des Rahmens formschlüssig miteinander.

Aufgrund der mit der Anordnung des Schließsystems in der Tretlagerwelle mit der damit verbundenen sehr niedrigen Einbauhöhe und der gleichzeitig mit der erfindungsgemäßen Lösung verbundenen großen Einbautiefe inmitten der Tretlagerwelle wird das Schließsystem für unerwünschte Manipulationen schwer zugänglich. Gleichzeitig bewirkt die erfindungsgemäße, geschützte Unterbringung des Zylinderschlosses inmitten einer funktional bedingten Baugruppe, der Tretlagerwelle, ein extrem niedriges zusätzliches Transportgewicht.

Zur Diebstahlsicherung wird das mit seinem einen Ende am Bolzenkopf 24 angeordnete, flexible Sicherungselement 27 beispielsweise, wie in der Figur 7 dargestellt, um einen Laternenmast 30 geschlungen, durch die beiden Räder des Fahrrades hindurchgeführt, und nach dem Aufstecken des ebenfalls mit dem flexiblen Sicherungselement 27 verbundenen Schließringes 26 auf die Ringführung 25 des Schließbolzens 22 wird der Schließbolzenkopf 23 in der erfindungsgemäßen Tretlagerwelle 5 wie bereits erläutert arretiert.

Da der Schließring 26 und der Bolzenkopf 24 aus gehärtetem, beziehungsweise hochfestem Material besteht, und aufgrund der erfindungsgemäßen Anordnung von Schließring 26 und Bolzenkopf 24 unmittelbar vor der Befestigungsschraube 8 der Pedalkurbel 7 diese Pedalkurbel vor unbefugter Demontage schützt, wird durch die erfindungsgemäße Lösung zugleich eine unbefugte Demontage der Tretlagerwelle 5 verhindert.

Die Figur 2 zeigt die erfindungsgemäße Diebstahlsicherung in einer anderen Bauform mit erfindungsgemäßer, gleichzeitiger Blockierung der Tretlagerwelle in der Draufsicht im Schnitt.

Der in der Tretlagerwelle 5 angeordnete Schieber 17 ist dabei in seiner Baulänge so bemessen, daß er in Schließstellung in die Ausnehmung 31 einer um eine Schließbuchse 32 verlängerte Lageraufnahme 3 ("hineinfährt") eingreift.

Mittels dieser erfindungsgemäßen Anordnung wird so gleichzeitig mit der exakten axialen Positionierung des Schließbolzens 22 in der Tretlagerwelle 5 bewirkt, daß das Tretlager 5 beim Verriegeln des Schließbolzens 22 in seiner Drehfreiheit blockiert wird.

Ein Herausdrehen der, in nur einer Schließbuchse 32 arretierten, Tretlagerwelle 5 ist auf Grund der speziellen Anordnung der Baugruppen der erfindungsgemäßen Diebstahlsicherung nicht möglich, da infolge der erfindungsgemäßen Lösung auch beide Pedalkurbeln 7 "im abgeschlossenen Zustand" nicht demontiert werden können.

Der erfindungsgemäß mit einem Schließbolzen 22 versehene, und mit diesem Schließbolzen 22 in der Tretlagerwelle 5 verankerte, Schließbügel 33 verbindet, wie in Figur 2 dargestellt, die Tretlagerwelle 5, einen Laternenfahl 30 und verschiedene Baugruppen des Fahrradrahmens formschlüssig so miteinander, daß ein Diebstahl des Fahrrades verhindert werden kann.

Die Ausnehmungen 31 sind dabei vorzugsweise in der Schließbuchse 32 so angeordnet, daß das Eingreifen des Schiebers 17 in die Ausnehmungen 31 stets nur bei vertikaler Stellung Pedalkurbel 7 erfolgt.

In dieser vertikalen Pedalstellung ist es nicht möglich auf die Tretlagerwelle ein so hohes Drehmoment aufzubringen, daß dadurch beispielsweise Sicherungselemente verformt, oder in ihrer Lage verändert werden könnten.

Die Figur 5 zeigt den Schließbolzen 22 in einer weiteren speziellen Ausführungsform mit kurzem Bolzenkopf 24 und großem Schließring 26 mit einer analog zu Figur 1 beschriebenen Funktionsweise.

In der Figur 6 ist eine speziellen Ausführungsform des erfindungsgemäßen Schließbolzens 22 dargestellt. Bei dieser Ausführungsform, mit einem speziell gestalteten, geteilten Schließbolzen 22 wird das Anschlußstück 28 mit dem an diesem mittels eines Befestigungselement 29 befestigten Sicherungselement 27 in den Schließbolzen 22 eingeführt, beide Bauelemente werden nachfolgend formschlüssig, wie in der Figur 6 dargestellt, durch Überstülpen des Schließringes, an welchem vorzugsweise das andere Ende des Sicherungselementes angeordnet ist, verbunden.

Die Arretierung des Schließbolzens 22 im Tretlager erfolgt wieder nach dem bereits in Figur 1 beschriebenen Funktionsprinzip.

Diese Ausführungsform soll, in Verbindung mit der nicht die Drehbarkeit des Tretlagers verriegelnden Bauform der erfindungsgemäßen Lösung, speziell der Minimierung des Transportvolumens der zu transportierenden Baugruppen dienen, und ermöglicht in Verbindung mit der Bauform ohne Blockierung des Tretlagers (nur Anspruch 1) ein Verbleiben und Abschließen des nicht mit einem Sicherungselement 27 versehenen Schließbolzens 22 in der Tretlagerwelle 5, so daß der sperrige Schließbolzen 22 weder während der Fahrradfahrt noch im abgeschlossenen Zustand des Fahrrades separat transportiert werden muss, und gleichzeitig durch das Verbleiben des Schließbolzens 22 in der Durchgangsbohrung 9 eine Verschmutzung der in der Tretlagerwelle angeordneten Funktionsbaugruppen vermieden wird.

In der Figur 7 ist ein mittels eines Sicherungsbandes 27 mit der erfindungsgemäßen Lösung an einem Laternenmast 30 in der Tretlagerwelle 5 "angeschlossenes" Fahrrad dargestellt.

Mit der erfindungsgemäßen Lösung ist es gelungen, eine fertigungstechnisch einfach herstellbare Diebstahlsicherung für Fahrräder zu entwickeln, die ein Wegschieben oder Wegtragen des Fahrrades durch Unbefugte verhindert, sich durch ein sehr hochwertiges, schwer zugängliches Schließsystem mit niedrigem Transportgewicht auszeichnet, welches bei allen Fahrradrahmenbauformen und allen Fahrradrahmenmaterialien (selbst bei Leichtbaumaterialien) kostengünstig mit geringem Montageaufwand nachrüstbar ist, und eine Zerstörung des Fahrradrahmens durch bei

Gewalteinwirkung extrem beanspruchte Baugruppen des Schließsystems vermeidet.

### Bezugszeichenzusammenstellung

- 1: Rahmenrohr
- 2: Tretlagerführung
- 3: Lageraufnahme
- 4: Wälzlager
- 5: Tretlagerwelle
- 6: Kettenrad
- 7: Pedalkurbel
- 8: Befestigungsschrauben
- 9: Durchgangsbohrung
- 10: Mittenbereich
- 11: Aussparung
- 12: Schloßgehäuse
- 13: Zylinderschloss
- 14: Schlüssel
- 15: Betätigungsstück
- 16: Exzenterbolzen
- 17: Schieber
- 18: Exzenterbolzenführung
- 19: Schließnut
- 20: Freistich
- 21: Zentrierbohrung
- 22: Schließbolzen
- 23: Schließkopf
- 24: Bolzenkopf
- 25: Ringführung
- 26: Schließring
- 27: Sicherungselement
- 28: Anschlußstück
- 29: Befestigungselement
- 30: Laternenmast
- 31: Ausnehmung
- 32: Schließbuchse
- 33: Schließbügel

## Patentansprüche

1. Diebstahlsicherung für Fahrräder mit einem oder mehreren Rahmenrohr/en (1) und einer an diesem/diesen angeordneten Tretlagerführung (2), wobei beidseitig in der Tretlagerführung (2) jeweils eine rechte und eine linke Lageraufnahme (3) mit Wälzlagern (4) angeordnet ist, in denen drehbar eine Tretlagerwelle (5) gelagert ist, wobei an einem Ende der Tretlagerwelle (5) ein Kettenrad (6) mit einer Pedalkurbel (7) und am anderen Ende der Tretlagerwelle (5) eine Pedal kurbel (7) angeordnet sind, welche mittels jeweils einer Befestigungsschraube (8) beidseitig mit der Tretlagerwelle (5) verschraubt sind, **dadurch gekennzeichnet, daß** sowohl axial in der Tretlagerwelle (5) wie auch axial in den Befestigungsschrauben (8) zentrisch Durchgangsbohrungen (9) angeordnet sind, und die im Mittenbereich (10) in ihrem Außendurchmesser stärker dimensionierte Tretlagerwelle (5) dort mit einer radialen Aussparung (11) versehen ist, in welcher sowohl ein Schlossgehäuse (12) mit einem Zylinderschloss (13) wie auch ein Schieber (17) angeordnet sind, wobei der Schlüssel (14) des Zylinderschlosses (13) die dem Zylinderschloss am nächsten liegende Befestigungsschraube (8) axial durchdringt, und an der gegenüberliegenden Stirnseite des Zylinderschlosses (13) ein Exzenterbolzen (16) angeordnet ist, der über eine Exzenterbolzenführung (18) in einer Stirnseite des in der Aussparung (11) verschiebbar angeordneten Schiebers (17) in Wirkverbindung steht, wobei in der der Exzenterbolzenführung (18) gegenüberliegenden Stirnseite des Schiebers (17) eine mit einer Zentrierbohrung (21) versehene Schließnut (19) angeordnet ist, in welche der Schließkopf (23) eines, durch die Durchgangsbohrung (9) der gegenüberliegenden, zweiten Befestigungsschraube (8) und die Aussparung (11) in der Tretlagerwelle (5) hindurchsteckbaren, Schließbolzens (22) eines Befestigungssystems hineinragt.

2. Diebstahlsicherung für Fahrräder nach Anspruch 1, **dadurch gekennzeichnet, daß** der Schieber (17) so dimensioniert ist, daß dieser in Schließstellung gleichzeitig in eine Ausnehmung (31) einer um eine Schließbuchse (32) verlängerten Lageraufnahme (3) eingreift.

3. Diebstahlsicherung für Fahrräder nach Anspruch 2, **dadurch gekennzeichnet, daß** die Ausnehmung/en (31) in der Schließbuchse (32) so angeordnet sind, daß das Eingreifen des Schiebers (17) in die Ausnehmung/en (31) stets bei vertikaler Pedalstellung erfolgt.

4. Diebstahlsicherung für Fahrräder nach Anspruch 1 oder 2, **dadurch gekennzeichnet, daß** an dem die Befestigungsschraube (8) überragenden Ende des Schließbolzens (22) des Befestigungssystems der Bolzenkopf (24) mit einer tretlagerseitig benachbarten Ringführung (25) angeordnet ist, auf welcher ein Schließring (26) aufgesteckt wird, wobei sowohl am Schließkopf (23) wie auch am Schließring (26) ein flexibles Sicherungselement ( 27), wie beispielsweise ein hochfestes Band, ein Stahlseil oder eine Kette befestigt ist.

5. Diebstahlsicherung für Fahrräder nach Anspruch 1 **dadurch gekennzeichnet, daß** am Schließbolzen (22) ein separates Anschlußstück (28) mit einem an diesem angeordnetem Sicherungselement (27) so angeordnet ist, daß der Schließbolzen (22) mit dem Anschlußstück (28) durch Überstülpen eines am Bolzenkopf (24) des Schließbolzens (22) anliegenden Schließringes (26) formschlüssig verbunden ist.

6. Diebstahlsicherung für Fahrräder nach Anspruch 1 oder 2, **dadurch gekennzeichnet, daß** am Schließbolzen (22) ein Schließbügel (33) angeordnet ist.

7. Diebstahlsicherung für Fahrräder nach Anspruch 1 oder 2, **dadurch gekennzeichnet, daß** der Schließring (26), der Bolzenkopf (24) oder auch der Schließbügel (33) aus gehärtetem, beziehungsweise hochfestem Material besteht.

8. Diebstahlsicherung für Fahrräder nach Anspruch 1 oder 2, **dadurch gekennzeichnet, daß** ein- oder beidseitig im Bereich der Durchgangsbohrungen (9) der Befestigungsschrauben (8) Abdeckelemente angeordnet sein können.

9. Diebstahlsicherung für Fahrräder nach Anspruch 1 oder 2, **dadurch gekennzeichnet, daß** bei speziellen Bauformen der erfindungsgemäßen Lösung der Schlüssel (14) nur bei abgeschlossenen Schließsystem herausgezogen werden kann.

## Claims

1. Anti-theft device for cycles with one or more frame tube/tubes (1) and a crankshaft housing (2) arranged on these tube/tubes, in which a right and a left bearing seat (3) with roller bearings (4) are arranged on both sides of the crankshaft housing (2), in which is mounted a rotating crankshaft (5), in which a sprocket wheel (6) with a pedal crank (7) is fitted to one end of the crankshaft (5), and a pedal crank (7) is fitted to the other end of the crankshaft (5), which are each attached to the crankshaft (5) on both sides by means of a fixing screw (8), **characterised by** the fact that holes (9) are drilled axially and centrally in both the crankshaft (5) and the fixing screws (8), and the crankshaft (5), which has a section of larger outer diameter in the middle area (10) is provided in this area with a radial recess (11), which contains both a lock housing (12) with a cylinder lock (13) and a pusher (17), whereby the key (14) of the cylinder lock (13) penetrates axially through the fixing screw (8) closest to the cylinder lock, and an excentric bolt (16) is arranged on the opposite face of the cylinder lock (13), which acts by means of an excentric bolt guide (18) in one face of the pusher (17), which can move within the recess (11), and in which a locking groove (19) fitted with a centring hole (21) is arranged in the face of the pusher (17) opposite to the excentric bolt guide (18), into which projects the locking head (23) of a locking bolt (22) of an attachment system, which penetrates through the hole (9) in the opposing, second fixing screw (8) and the recess (11) in the crankshaft (5).

2. Anti-theft device for cycles in accordance with Claim 1, **characterised by** the fact that the pusher (17) is so dimensioned that in the locking position, this projects into a recess (31) of the bearing seat (3), which is extended to form a locking sleeve (32).

3. Anti-theft device for cycles in accordance with Claim 2, **characterised by** the fact that the recess/es (31) in the locking sleeve (32) are arranged in such a way that the pusher (17) always locks into the recess/es (31) when the pedals are in the vertical position.

4. Anti-theft device for cycles in accordance with Claim 1 or 2, **characterised by** the fact that on the end of the locking bolt (22) of the attachment system projecting through the fixing screw (8), the bolt head (24) is fitted with a neighbouring annular guide (25) on the crankshaft side, over which a locking ring (26) is placed, and a flexible security device (27), such as a high-tensile band, steel cable or chain is attached both to the locking head (23) and to the locking ring (26).

5. Anti-theft device for cycles in accordance with Claim 1, **characterised by** the fact that a separate connecting element (28) with an attached security device (27) is fitted to the locking bolt (22) in such a way that the locking bolt (22) locks positively with the connecting element (28) when the locking ring (26) is placed in position on the bolt head (24) of the locking bolt (22).

6. Anti-theft device for cycles in accordance with Claim 1 or 2, **characterised by** the fact that a locking bar (33) is fitted to the locking bolt (22).

7. Anti-theft device for cycles in accordance with Claim 1 or 2, **characterised by** the fact that the locking ring (26), the bolt head (24) or also the locking bar (33) are made of hardened or high-tensile material.

8. Anti-theft device for cycles in accordance with Claim 1 or 2, **characterised by** the fact that covering elements can be arranged on one or both sides in the area of the holes (9) through the fixing screws (8).

9. Anti-theft device for cycles in accordance with Claim 1 or 2, **characterised by** the fact that in special designs of the solution described by the invention, the key (14) can only be removed when the system is locked.

## Revendications

1. Antivol pour cycles avec un ou plusieurs tubes de cadre (1) et une boîte de pédalier (2) sur le/les tubes, de chaque côté de la boîte de pédalier (2) est montée une cuvette à billes (3), dont une à droite et une à gauche, avec des paliers à roulement (4) dans lesquels est logé de manière mobile un axe de pédalier (5). A une extrémité de l'axe du pédalier (5) se trouve le plateau (6) avec une manivelle de pédalier (7) et à l'autre extrémité de l'axe du pédalier (5) est monté l'autre manivelle de pédalier (7), reliée chacune des deux côtés à l'axe du pédalier (5) au moyen d'une vis de fixation (8), **caractérisé en ce que** tant axialement dans l'axe du pédalier (5) qu'axialement dans les vis de fixation (8), des trous (9) sont réalisés de manière centrale et l'axe du pédalier (5) dont le diamètre extérieur est plus grand dans la partie centrale (10) y est muni d'un évidement radial (11) dans lequel sont logés un corps de serrure (12) avec un cylindre de verrouillage (13) ainsi qu'un pêne (17). La clé (14) du cylindre de verrouillage (13) traverse axialement la vis de fixation (8) la plus proche du cylindre de verrouillage et sur la face opposée du cylindre de verrouillage (13) est prévu un boulon d'excentrique (16) en liaison mécanique grâce à un orifice de boulon d'excentrique (18) dans une face du pêne (17) logé de manière mobile dans l'évidement (11). Dans la face du pêne (17) opposée à l'orifice de boulon d'excentrique (18) est aménagée une gorge (19) munie d'un alésage de centrage (21) dans lequel s'engage le noyau (23) d'un boulon de fermeture (22), qui s'introduit par le trou (9) de la deuxième vis de fixation (8) opposée et l'évidement (11) dans l'axe du pédalier (5), du dispositif antivol.

2. Antivol pour cycles conforme à la revendication 1, **caractérisé en ce que** le pêne (17) est dimensionné de sorte qu'en position fermée, celui-ci s'engage en même temps dans le creux (31) d'une cuvette à billes (3) prolongée d'une gâche (32).

3. Antivol pour cycles conforme à la revendication 2, **caractérisé en ce que** le/les creux (31) dans la gâche (32) sont aménagés de sorte que l'engagement du pêne (17) dans le/les creux (31) se fasse toujours à la position verticale du pédalier.

4. Antivol pour cycles conforme à la revendication 1 ou 2, **caractérisé en ce que** sur l'extrémité surplombant la vis de fixation (8) du boulon de fermeture (22) du dispositif de fixation, la tête du boulon (24) présente côté pédalier un guide annulaire (25) adjacent sur lequel s'insère un anneau de blocage (26), permettant de fixer sur le noyau (23) et sur l'anneau de blocage (26) un dispositif antivol (27) flexible sous forme d'une sangle extrêmement rigide, d'un câble d'acier ou d'une chaîne.

5. Antivol pour cycles conforme à la revendication 1, **caractérisé en ce que** sur le boulon de fermeture (22) est prévu un élément de raccordement (28) séparé avec un dispositif antivol (27) monté de sorte que le bouton de fermeture (22) forme une liaison rigide avec l'élément de raccordement (28) emboîté par retournement de l'anneau de blocage (26) adjacent à la tête (24) du boulon de fermeture (22).

6. Antivol pour cycles conforme à la revendication 1 ou 2, **caractérisé en ce que** sur le boulon de fermeture (22) est prévue une anse d'antivol (33).

7. Antivol pour cycles conforme à la revendication 1 ou 2, **caractérisé en ce que** l'anneau de blocage (26), la tête du boulon (24) voire l'anse d'antivol (33) sont constitués d'un matériau extrêmement résistant ou en acier trempé.

8. Antivol pour cycles conforme à la revendication 1 ou 2, **caractérisé en ce que** au niveau des trous (9) des vis de fixation (8), des éléments de couverture peuvent être réalisés d'un ou des deux côtés.

9. Antivol pour cycles conforme à la revendication 1 ou 2, **caractérisé en ce que** dans le cas d'une mise en oeuvre spéciale selon l'invention, la clé (14) ne peut être retirée que dispositif antivol fermé.
